# EUROPÄISCHE PATENTANMELDUNG

(11) **EP 1 426 670 A1**
(43) Veröffentlichungstag der Anmeldung: **09.06.2004**
(21) Anmeldenummer: 03017999.8
(22) Anmeldetag: 07.08.2003
(51) Int. Cl.: F16L 41/03, F15B 13/00

(54) **Anschlussvorrichtung und Kälteanlage, enthaltend Anschlussvorrichtungen für Geräte zur Erfassung, Anzeige und Regelung eines Systemdruckes**

(30) Priorität: 07.12.2002 DE 20218989 U
(71) Anmelder: TEKO Gesellschaft für Kältetechnik mbH, 63674 Altenstadt (DE)
(72) Erfinder: Kühn, Carsten, 35423 Lich (DE)
(74) Vertreter: Müller-Wolff, Thomas, Dipl.-Ing.

(57) **Zusammenfassung**

Die Erfindung betrifft eine Anschlussvorrichtung für Geräte zur Erfassung, Anzeige und Regelung eines Systemdrucks und zum Verbinden mindestens einer Druckleitung insbesondere in Kühlanlagen mit Überwachungs-, Steuer- und Sicherheitseinrichtungen, dadurch gekennzeichnet, dass die Anschlussvorrichtung aus einer Verteilerleiste besteht, die mindestens eine Hauptbohrung (2) und mehrere, senkrecht zur Hauptbohrung verlaufende und mit dieser verbundenen Verteilerbohrungen (3) zum Anschluss der Geräte zur Erfassung, Anzeige und Regelung eines Systemdrucks aufweist, wobei die Verteilerleiste mit der Hauptbohrung an beide Enden der Druckleitung anschließbar ist und die Verteilerbohrungen ausgangsseitig entweder einen Gewindeanschluss oder eine Verschlusseinrichtung enthalten.

Eine vorteilhafte Verteilerleiste nach der Erfindung ist dadurch gekennzeichnet, dass die Anschlussbohrungen über mehrere Anschlussseiten der Verteilerleiste verteilt sind. Die Erfindung betrifft ferner eine Kälteanlage, bestehend aus mehreren Aggregaten wie Kältemaschine, Pumpen, Ventilatoren, aus Kältemittelleitungen sowie Regel- und Steuereinrichtungen und enthält zwischen den Aggregaten und den Regel- und Steuereinrichtungen mindestens eine erfindungsgemäße Verteilerleiste.

## Beschreibung

Die Erfindung betrifft eine Anschlussvorrichtung für Geräte zur Erfassung, Anzeige und Regelung eines Systemdruckes, insbesondere für den Anschluss von Druckmessgeräten, Niederdruck- und Hochdruckaufnehmern, Druckbegrenzern oder druckgesteuerten Ventilen in Kühlanlagen. Die Erfindung betrifft weiterhin eine Kälteanlage, hergestellt unter Verwendung von Anschlussvorrichtungen.

Bisher erfolgten die Geräteanschlüsse verschiedener Überwachungs-, Steuer- un Sicherheitseinrichtungen bei Drucksystemen wie z.B. Kälteanlagen über einzelne Druckanschlüsse, die im ganzen System verteilt mit separaten Verteilerstücken und Kupplungsvorrichtungen ausgerüstet waren. Dies hat eben einem hohen Kostenaufwand den Nachteil, dass durch die Vielzahl der verwendeten Verschraubungen und Dichtungen eine erhöhte Gefahr von Undichtigkeit besteht. Auch lassen sich die im ganzen System verteilt angeordneten Mess- und Regelgeräte nicht so einfach vor äußerer Krafteinwirkung schützen, so dass immer wieder Beschädigungen auftreten können.

Aufgabe der vorliegenden Erfindung ist es, die in Drucksystemen - wie Kälteanlagen oder dergleichen - anzuordnenden Geräte zur Erfassung, Anzeige und Regelung sowie Weiterleitung eines Systemdruckes, insbesondere in Form von Messgeräten, Druckschaltern oder Druckaufnehmer für Kühlanlagen in besonders platzsparender Weise anzuordnen, so dass sie leicht montierbar und vor äußeren Krafteinwirkungen geschützt werden können. Außerdem sollen Kälteanlagen unter Verwendung von Anschlussvorrichtungen möglichst kostengünstig hergestellt werden können und diese geeignet sein für den Anschluss einer Vielzahl unterschiedlicher Geräte mit voneinander abweichenden Anschlussmaßen.

Diese Aufgabe wird erfindungsgemäß durch die in den Schutzansprüchen angegebenen Merkmale gelöst. Es hat sich gezeigt, dass durch Verwendung einer erfindungsgemäß ausgebildeten Drucksystem-Verteilerleiste eine Vielzahl von Mess-, Steuer- oder Regelgeräten auf engstem Raum platzsparend und kostengünstig in einer Kälteanlage unterzubringen ist. Sofern die Verteilerleiste aus einem Vierkanthohlprofil besteht, lässt sich eine Abschirmung der Überwachungs- und Sicherheitsgeräte mechanisch in einfacher Weise an einer planen Fläche so befestigen, dass die Geräte gut ablesbar und für Montagezwecke leicht zugänglich sind. Ferner lassen sich mehrere Verteilerleisten mit einer anderen planen Fläche des Vierkantprofils verbinden, so dass ein Verbundnetz entsteht, mit dem eine Vielzahl von Schaltungsarten wie z.B. Kaskadenschaltungen herstellbar sind.

Im folgenden wird die Erfindung anhand mehrerer Ausführungsbeispiele näher erläutert. Es zeigen:
- Fig. 1: Perspektivische Ansicht einer erfindungsgemäß als Vierkantgussteil ausgebildeten Verteilerleiste
- Fig. 2: Längsquerschnitt durch eine weitere erfindungsgemäß ausgebildete Verteilerleiste
- Fig. 3a: Erfindungsgemäß ausgebildete Verteilerleiste mit Abschirmung in Frontansicht
- Fig. 3b: Verteilerleiste mit Abschirmung in Seitenansicht
- Fig. 4: Verteilerleiste mit integrierten Geräten zur Erfassung, Anzeige und Regelung des Systemdruckes
- Fig. 5: Verteilerleiste mit mehreren Hauptbohrungen
- Fig. 6: Mehrere zu einem Leitungsnetz zusammengeschaltete Verteilerleisten

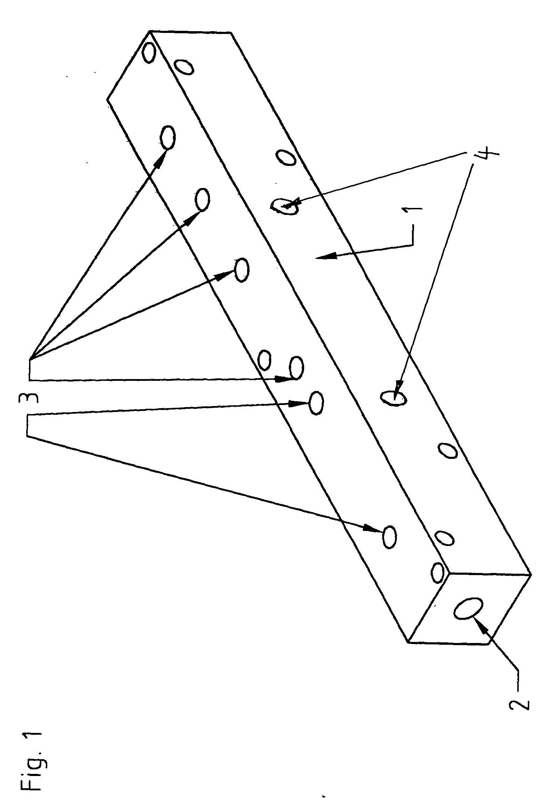

Die erfindungsgemäße Anschlussvorrichtung besteht laut Fig. 1 aus einer als Vierkantgussteil ausgebildeten Verteilerleiste 1, die eine in Längsrichtung verlaufende Hauptbohrung 2 sowie senkrecht hierzu verlaufende Verteilerbohrungen 3 aufweist. Des weiteren bestehen wiederum senkrecht zu den vorerwähnten Bohrungen 2, 3 mehrere Anschlussbohrungen 4 für eine Verbindung mit zusätzlichen Druckleitungen oder einer weiteren Verteilerleiste (nicht dargestellt).

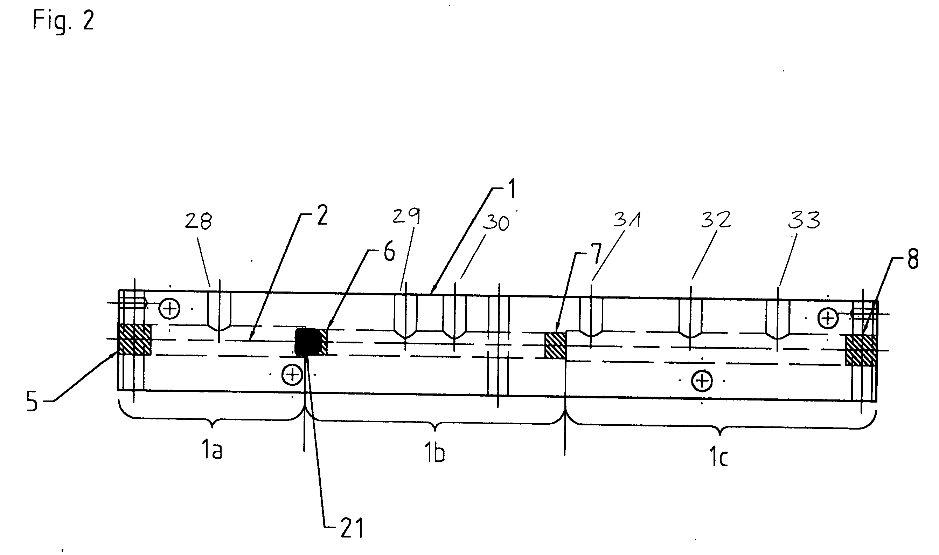

Fig. 2 zeigt einen Längsschnitt durch die zweite Variante einer erfindungsgemäß ausgebildeten Verteilerleiste 1, wobei die Hauptbohrung 2 mit mehreren Gewindeabschnitten 5, 6, 7, 8 versehen ist, so dass mehrere Kammern entstehen. In die Gewindeabschnitte 5, 8 können Leitungsverbinder (nicht dargestellt) für den Anschluss an das Drucksystem oder weitere Leitungsnetze eingeschraubt werden. Die Gewindeabschnitte 6, 7 können für Verschluss- oder Abtrenneinrichtungen genutzt werden, wodurch die Verteilerleiste in mehrere Abschnitte 1a, 1b, 1c mit unterschiedlichen Druckbereichen unterteilbar ist. Diese Druckbereiche sind mit zusätzlichen Anschlussöffnungen 28 - 33 versehen, die entweder auf einer oder auf mehreren Flächen des Vierkantprofils angeordnet sind.

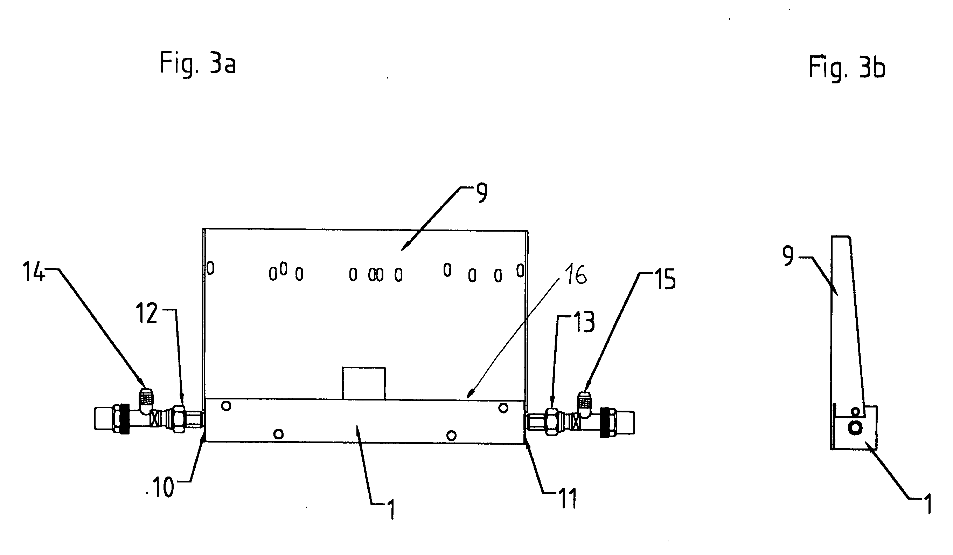

Die Figuren 3a und 3b zeigen die erfindungsgemäß ausgebildete Verteilerleiste mit einer Abschirmung 9, die mit der Verteilerleiste 1 verschraubt ist. Ferner erkennt man an den Anschlussenden 10, 11 der Verteilerleiste 1 jeweils einen Schraubverbinder 12, 13, der mit einer der Drucksystemleitungen 14, 15 verbunden ist. Die Anschlussseite für die Geräte zur Erfassung, Anzeige und Regelung eines Systemdruckes befindet sich auf einer ebenen Fläche16.

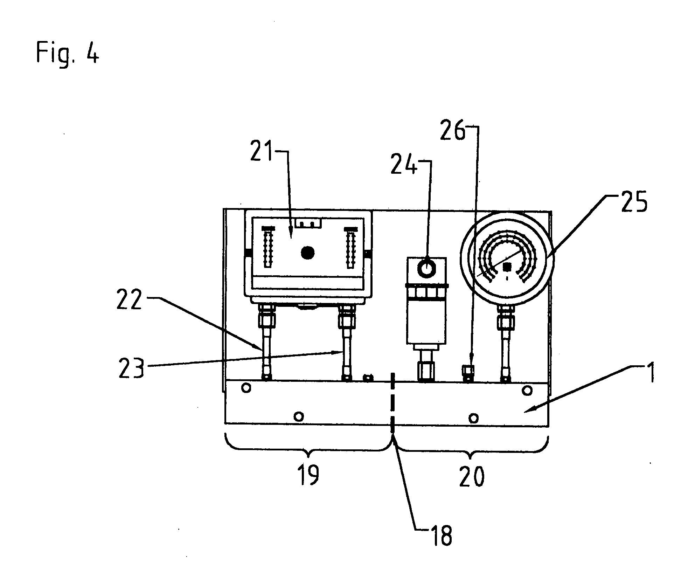

Fig. 4 zeigt eine weitere Verteilerleiste mit den integrierten Geräten zur Erfassung, Anzeige und Regelung des Systemdrucks. In diesem besonderen Ausführungsbeispiel wird die Verteilerleiste 1 in Höhe der gestrichelten Linie 18 in zwei unabhängige Druckmessbereiche 19, 20 unterteilt. Die Unterteilung der Druckmessbereiche erfolgt über Verschlussstopfen 21, wie in Fig. 2 im Bereich des Gewindeabschnittes 6 angedeutet ist.

Fig. 4 zeigt ferner die verschiedenen Anschlussmöglichkeiten an die die Verteilerbohrungen für unterschiedliche Geräte und Funktionen in den Abschnitten 19, 20. So befindet sich im Abschnitt 19 eine Drucküberwachungs- und Steuereinheit 21, die mit den Verteilerbohrungen über jeweils eine Vertikalleitung 22, 23 verbunden ist.

Im Abschnitt 20 ist ein Hochdruckaufnehmer 24 und ein Druckmanometer 25 über je eine Verteilerbohrung mit der Hauptbohrung der Verteilerleiste 1 verbunden. Zwischen beiden Geräten befindet sich noch ein Messanschluss 26 für Prüf- oder Messzwecke.

Selbstverständlich lassen sich auch andere Geräte zur Erfassung, Regelung und Anzeige des Systemdrucks in beliebiger Position auf der Verteilerleiste verwenden.

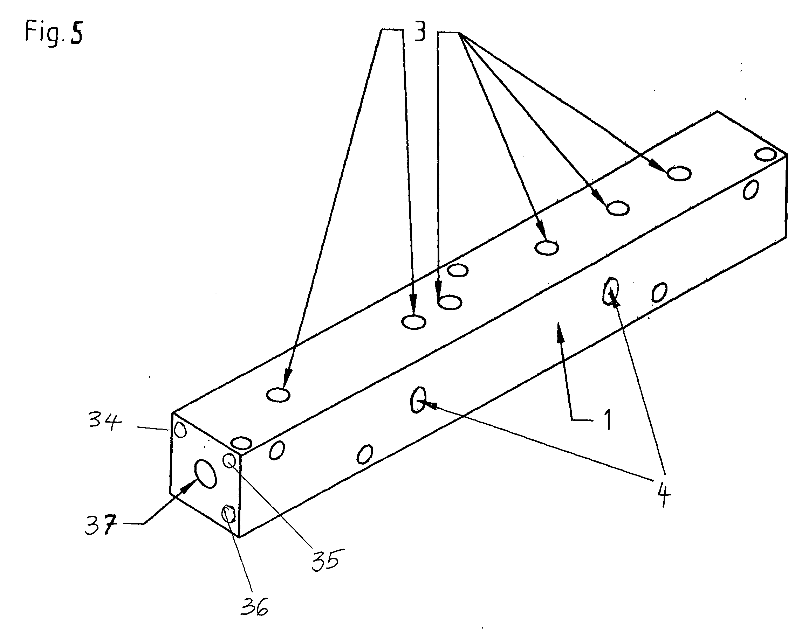

Auch die Unterteilung durch Profilwände oder Verschlusseinrichtungen lässt sich beliebig verändern, so dass die erfindungsgemäße Verteilerleiste an fast alle Drucksysteme angepasst werden kann. Da auch die Schutzwand oder Abschirmung 9 verstellbar ist, kann man die Verteilerleiste als Universalverteilersystem ansehen. Wenn mehr als eine Hauptbohrung vorhanden ist, beispielsweise vier Bohrungen 34-37 wie in Fig. 5 dargestellt, können noch mehr Druckabschnitte gebildet werden, die mit entsprechenden Geräten oder Versorgungsleitungen verbunden eine neue Leitungsstruktur ergeben.

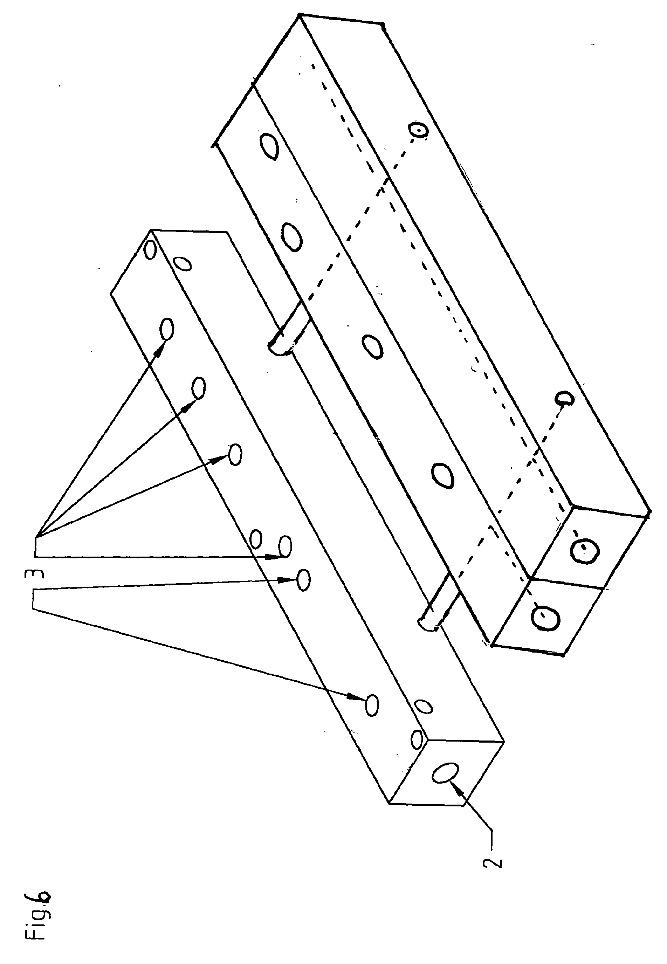

Es lassen sich auch weitere Druckanschlussleisten parallel zusammenschalten. Dies ist in Fig. 6 dargestellt. Somit kann das Leitungssystem zu einem komplexen Leitungsnetz ausgebaut werden, das vorteilhaft bei einer Kälteanlage genutzt werden kann.

Beispiele für derartige Kälteanlagen, die zu einem Leitungsnetz ausgebaut werden können, sind kaskadengeregelte Kühlanlagen, Verbundnetze mit parallel oder in Reihe geschalteten Verbrauchern sowie ein- und mehrstufige Kältemaschinen. Diese werden durch das erfindungsgemäße Verschalten mittels Verteilerleisten übersichtlich, leicht montierbar und störungsunanfälliger.

## Patentansprüche

1. Anschlussvorrichtung für Geräte zur Erfassung, Anzeige und Regelung eines Systemdrucks und zum Verbinden mindestens einer Druckleitung insbesondere in Kühlanlagen mit Überwachungs-, Steuer- und Sicherheitseinrichtungen, **dadurch gekennzeichnet, dass** die Anschlussvorrichtung aus einer Verteilerleiste besteht, die mindestens eine Hauptbohrung (2) und mehrere, senkrecht zur Hauptbohrung verlaufende und mit dieser verbundenen Verteilerbohrungen (3-) zum Anschluss der Geräte zur Erfassung, Anzeige und Regelung eines Systemdrucks aufweist, wobei die Verteilerleiste mit der Hauptbohrung an beide Enden der Druckleitung anschließbar ist und die Verteilerbohrungen ausgangsseitig entweder einen Gewindeanschluss oder eine Verschlusseinrichtung enthalten.

2. Anschlussvorrichtung nach Anspruch 1, **dadurch gekennzeichnet, dass** weitere zur Hauptbohrung und zu den Verteilerbohrungen senkrecht verlaufende Anschlussbohrungen in der Verteilerleiste angeordnet sind für die Verbindung mit zusätzlichen Druckleitungen, einer weiteren Verteilerleiste oder mit Saugleitungen.

3. Anschlussvorrichtung nach Anspruch 1, **dadurch gekennzeichnet, dass** die Verteilerleiste aus einem Hohlprofil gebildet wird, das quer zur Längsachse mindestens eine Profiltrennwand aufweist zur Bildung von Abschnitten zwischen der Hauptbohrung, den Verteilerbohrungen und den Anschlussbohrungen.

4. Anschlussvorrichtung nach einem der vorhergehenden Ansprüche, **dadurch gekennzeichnet, dass** in einem mittleren Bereich M der Verteilerleiste mindestens eine Verengung V in der Hauptbohrung vorgesehen ist, in die mindestens ein Endstück E einsetzbar ist zur Unterteilung der Hauptbohrung der Verteilerleiste in verschiedene Druckmessbereiche oder in Hochdruckund Niederdruckbereiche.

5. Verteilerleiste nach einem der vorhergehenden Ansprüche, **dadurch gekennzeichnet, dass** die Anschlussbohrungen über mehrere Anschlussseiten der Verteilerleiste verteilt sind für den Anschluss von Überwachungs-Steuerund Sicherheitseinrichtungen mit unterschiedlichem Gehäuseaufbau oder für Druck-/Saugverbindungen.

6. Verteilerleiste nach einem der vorhergehenden Ansprüche, **dadurch gekennzeichnet, dass** die Verteilerleiste an den Anschlussenden 10, 11 über Schraubverbinder 12, 13 mit Drucksystemleitungen 14, 15 verbunden sind.

7. Verteilerleiste nach einem der vorhergehenden Ansprüche, **dadurch gekennzeichnet, dass** das Hohlprofil aus einem oder mehreren Rohren besteht.

8. Verteilerleiste nach einem der vorhergehenden Ansprüche, **dadurch gekennzeichnet, dass** mindestens eine Seite der Verteilerleiste eine ebene Anschlussfläche aufweist, in die die Anschlussbohrungen senkrecht münden.

9. Verteilerleiste nach einem der vorhergehenden Ansprüche, **dadurch gekennzeichnet, dass** jede Verteilerleiste eine zentrische Hauptbohrung und mehrere exzentrisch angeordnete Anschlussbohrungen aufweist.

10. Verteilerleiste nach einem der vorhergehenden Ansprüche, **dadurch gekennzeichnet, dass** jede Verteilerleiste aus einem Gussteil oder einem Strangpressteil besteht, wobei mehrere Verteilerleisten parallel liegend über die Anschlussbohrungen verbunden sind.

11. Kälteanlage, bestehend aus mehreren Aggregaten wie Kältemaschine, Pumpen, Ventilatoren, aus Kältemittelleitungen sowie Regel- und Steuereinrichtungen, **dadurch gekennzeichnet, dass** zwischen den Aggregaten und den Regel- und Steuereinrichtungen mindestens eine Verteilerleiste angeordnet ist zur variablen Verbindung mit Druckleitungen, Mess- und Prüfgeräten und Ventilen.
